# EUROPEAN PATENT APPLICATION

(11) **EP 3 975 373 A1**
(43) Date of publication of application: **30.03.2022**
(21) Application number: 20198871.4
(22) Date of filing: 29.09.2020
(51) Int. Cl.: H02J 7/00

(54) **ENERGY STORAGE SYSTEM USING SUPERCAPACITORS**

(71) Applicant: Nawatechnologies, 13100 Aix-En-Provence (FR)
(72) Inventor: TOMMASI, Michele, 83140 SIX FOURS (FR)
(74) Representative: Schmidt, Martin Peter

(57) **Abstract**

System for storing electrical energy using groups of capacitors (C) being connected to each other, said system comprising J non-switched groups of P capacitors (C) in series, where J=0 or J=1, and if J=1 then P≥1, and P is an integer,
where said J non-switched group, if present, comprise only P capacitors and no switches, said system also comprising K switched groups of Q capacitors (C) in series, where K≥1 and Q≥1, and K and Q are integers,
where said K switched groups are equipped with a pair of switches, namely top switches (St) and bottom switches (Sb), in a half-bridge configuration,
said half-bridges being configured to either exclude or insert the associated group of capacitors from said system,
said system having all groups connected in series.

## Description

### Technical field of the invention

The invention relates to the general field of systems for storing electric energy, and more particularly to the field of energy storage systems using supercapacitors. In particular, it relates to novel arrangements for charging and depolarizing storage systems for electric energy using supercapacitors. These systems strive at maximizing the stored electric energy that can be retrieved from supercapacitor arrays in equipment designed for functioning in a rather narrow voltage range.

### State of the art

Supercapacitors have been adopted in many electric systems, from appliances and tools to electric vehicles. However, while batteries provide all their energy within a limited voltage swing, supercapacitors need to have a much wider voltage swing in order to keep energy utilization efficiency high. If used directly as a battery replacement in equipment designed for the narrow voltage swing of batteries, only a small part of the energy stored in the supercapacitor would be used.

The solutions to this issue often suffer from major shortcomings. One solution is to oversize the supercapacitors; this is wasteful and costly. Another solution inserts a DC-DC converter in the circuit, to convert the wide voltage swing of the supercapacitors to a narrower range, comparable to that of batteries; but this solution can be complex, inefficient and expensive. Another solution consists in switching the supercapacitor cells, recombining them in series/parallel configurations that reduce voltage swing.

Supercapacitor based energy storage systems typically require some form of voltage conversion or reconfiguration in order to match the wide voltage swing of supercapacitors to the narrower voltage range required by typical loads. While supercapacitors have a wide voltage swing from maximum voltage (typically 2.7 V) down to zero volts, rechargeable batteries provide all their energy within a narrow band of voltages. For example, a lithium battery cell operated for long life and rated nominally at 3.7 V typically provides 70 % of its energy by discharging from a starting voltage of 4.2 V down to about 3.35 V. Lithium and other battery technologies imply voltage swings varying from a maximum voltage level, to a low level around 80 % of maximum. Other rechargeable battery technologies have similar ratios.

Due to the popularity of rechargeable batteries in portable tools and electric vehicles, most of these devices operate in a voltage range that matches battery requirements, with the minimum voltage around 80 % of maximum voltage. In an appliance designed to operate with lithium batteries, it is possible to replace the batteries directly with a bank of supercapacitors of similar voltage rating. However, because the supercapacitor cells would operate typically between 2.7 V and 2.16 V, given that supercapacitor energy is proportional to the square of voltage, the supercapacitors would only provide 36 % of their stored energy.

In supercapacitors, 100 % energy utilization efficiency is hard to achieve, due to the necessity to descend to very low voltages. A satisfactory value for energy utilization efficiency would be 66 % or better.

Given the very low utilization efficiency when using a supercapacitor directly in an appliance designed for rechargeable batteries, one could partially solve the issue by tripling the capacitance, but this is inefficient, bulky and expensive.

A better solution would use a DC-DC converter to correct the mismatch between the wider voltage swing of supercapacitors and the narrower range of operating voltages. The converter would have to be rated at the maximum current and power required by the appliance, thus introducing bulk, complexity and cost.

Another approach to limiting the voltage range of the supercapacitor storage system without leaving most of the energy available unused is to reconfigure the supercapacitor bank in series/parallel combinations using switches. These techniques are also used to ensure that the supercapacitor cells remain balanced, correcting any differences between cell voltages. However, in most cases the solution proposed suffers from one or more issues, including large circulating currents at switching time due to imbalance between cells, incomplete balancing of cells, uneven flow of current causing imbalance, and a large number of switching devices.

One of the better switching solutions is described in Jin-Feng Nie, Xi Xiao, Zanxiang Nie, Peigen Tian, Ruoxing Ding "A Novel Three-Level Changeover Circuit of Super-Capacitor Bank for Energy Storage Systems", IECON 2012 - 38th Annual Conference on IEEE Industrial Electronics Society, pp. 144-149. The proposed solution takes 12 cells and recombines them into stacks of 3, 4 or 6 cells in series/parallel, and achieves balanced current flows in the steady state. However, the circuit still requires active balancing to keep cells in series equalized, any imbalance potentially causing large current spikes during serial/parallel reconfiguration, and the circuit requires a large number of switches (12). This would add complexity to the electronic system, and generates cost.

US patent 7,696,729 assigned to Advanced Desalination Inc describes a switching system of supercapacitors with or without batteries, but the technique described results in potentially very large currents at each switchover if the capacitors are not balanced, and remains vague about the switching strategy. In addition, the patent only covers the case of simultaneous charging and discharging in a hybrid system including a battery.

US patent application 2009/0091295 describes a so-called "balanced charging/discharging circuit" which is a system for switching battery cells into or out of the circuit during charging or discharging, thus achieving balance. The patent application however is limited to switching lithium batteries in order to maintain balance, and does not mention switching supercapacitors for the purpose of limiting voltage swing and matching to limited swing appliances. A large number of bidirectional switches is required.

Other solutions have been designed for providing power packs comprising both traditional batteries and supercapacitors, one of these power storage systems acting as a booster for the other. WO 2008/124510 and US 9,816,475, both assigned to Cooper Technologies Company, disclose systems for boosting the output voltage of traditional batteries (such as lead-acid batteries) to ensure starting of internal combustion engines in environments that are difficult for such traditional batteries. The system disclosed in US 9,816,475 includes a battery, a charger and a supercapacitor array connected in such a way that the battery current is provided to the supercapacitor array which, in turn, provides current to the motor starter; the batteries are recharged from the internal combustion engine when running. US 9,871,392 assigned to Schumacher Electric Corporation discloses a similar system using both batteries and supercapacitors. WO 2016/193803 assigned to SAM Outillage describes another booster device for motor vehicles comprising a supercapacitor element.

The problem addressed by the present invention is to provide a system using capacitors, and in particular supercapacitors, that is capable to replace a battery pack in a battery-powered electric device. In particular, the use of such a system should not require any further changes to the electrical design of said battery-powered electric device.

### Subject-matter of the invention

According to the invention, the problem is solved by a system for storing electrical energy using groups of capacitors (C) being connected to each other,
said system comprising J non-switched groups of P capacitors (C) in series,
where J=0 or J=1, and if J=1 then P≥1, and P is an integer,
where said J non-switched group, if present, comprise only P capacitors and no switches, said system also comprising K switched groups of Q capacitors (C) in series,
where K≥1 and Q≥1, and K and Q are integers,
where said K switched groups are equipped with a pair of switches, namely top switches (St) and bottom switches (Sb), in a half-bridge configuration,
said half-bridges being configured to either exclude or insert the associated group of capacitors from said system,
said system having all groups connected in series.

This system is a first object of the present invention.

Said K switched groups of capacitors (C) can comprise an equal number Q of capacitors (C), or they can comprise different numbers Q₁,Q₂,...Q_{K} of capacitors (C). The capacitors (C) in said K switched groups can have a different value of capacitance than the P capacitors (C) in the non-switched group, or at least one of said K switched groups of capacitors (C) can have the same value of capacitance as the P capacitors (C) in the non-switched group.

In specific embodiments, said groups of capacitors (C) comprise only capacitors (C) connected in series, or comprise only capacitors (C) connected in parallel.

In other specific embodiments, the non-switched group of capacitors (C) comprises capacitors (C) connected in series and the K switched groups of capacitors (C) comprise capacitors (C) connected in parallel, or vice versa.

The system can comprise a non-switched group of capacitors (C) that comprises P capacitors, and there can be K switched groups of capacitors (C) that comprise Q capacitors, P, K and Q being integers greater than or equal to one.

Said pairs of switches (Spa, Spb) can be of any type, such as the MOSFET, IGBT or relay type.

In a specific embodiment, said pair of switches (St, Sb) in a half-bridge configuration comprises one switch (St) to include capacitors (C) in said system and one switch (Sb) to exclude capacitors from said system.

Said system can be configured to deliver a voltage *Vmax* for said groups of capacitors (C) fully charged and a voltage *Vmin* for said groups of capacitors (C) discharged, said system comprising a control means for monitoring voltage in said groups of capacitors (C) and controlling said pairs of switches (Spa, Spb) to avoid reaching a voltage above Vmax or below *Vmin.*

At least part, and preferably all of said capacitors are supercapacitors or hybrid capacitors or lithium capacitors.

In another embodiment at least some of said capacitors are replaced by batteries, such as lithium batteries.

Another object of the present invention is an electrical power unit for use with an electric device, comprising at least one system according to the invention.

In particular, said electric power unit can be designed to be powered by a set of secondary batteries that is inserted into said electrical device and that is capable to make an electrical current flow through a first set of electric contacts connected to a second set of electric contacts, wherein said first set of electric contacts is located on said set of batteries and said second set of electric contacts is located on said electrical device, said electrical power unit being characterized in that it comprises a system according to the invention mounted in a housing that is insertable into said electric device in lieu and place of said set of secondary batteries, wherein a first set of electric contacts connectable to said second set of electric contacts is fixed to said housing, so that said electrical power unit is able to power said electric device.

Said electrical power unit is designed to replace a set of lithium ion secondary batteries. It comprises electrical energy storage cells that are capacitors, and advantageously supercapacitors. A third objecto of the invention is therefore the use of a system according to the invention to replace a battery pack in a battery-powered electric device.

Another object of the invention is the use of a system according to any of the embodiments of the present invention to replace a battery pack in a battery-powered electrical device. Such device can in particular be a hand-held electrical device, such as a tool.

### Figures

Figures 1, 2, 4 and 5 illustrate embodiments of the present invention; they are not intended to limit the scope of the invention.
Figure 1 schematically shows a generic capacitor energy storage system comprising a non-switched group of P capacitors C in series, and K switched groups of Q capacitors C in series, where the switched groups have a pair of switches S.
Figure 2 schematically shows a capacitor energy storage system of 5 switched groups of 4 capacitors C in series, where the switched groups have a pair of switches S (J=0, K=5, Q=4).
Figure 3 schematically shows a typical discharge curve of a system according to an embodiment of the invention according to figure 2, compared to a non-switched conventional system, all curves at same discharge current and total capacitor stored energy.
Figure 4 schematically shows a capacitor energy storage system of 1 non-switched group of capacitors C in series, and 1 switched group of supercapacitors C in series, where the switched groups have a pair of switches S (J=1, P=8, K=1, Q=2).
Figure 5 schematically shows a capacitor energy storage system of 1 non-switched group of capacitors C in series, and 2 switched groups of capacitors C in series, where the switched groups have a pair of switches S (J=1, P=8, K=2, Q=2).
Figure 6 schematically shows a typical discharge curve of a system according to an embodiment of the invention according to figures 4 and 5 compared to a non-switched conventional system, all curves at same discharge current and total capacitor stored energy.

### Detailed description of the invention

The term « capacitor» designates an electrical device that can store energy in an electric field between a pair of closely spaced conductors. In particular, the capacitors used in the present invention can be electrochemical capacitors. In advantageous embodiments, the present invention is used with supercapacitors. As a consequence, the term "capacitor" as used herein below shall comprise "supercapacitors".

The term « supercapacitor » or « ultracapacitor » designates a double-layer, high-density, electrochemical capacitor cell having a capacitance typically in the range of about 100 Farad to about 3,500 Farad or more. In general, a supercapacitor cell can hold a very high charge which can be released or restored relatively quickly. In the examples given, it is assumed that the maximum voltage of the supercapacitors is around 2.7 V, but the same advantages can be obtained by using supercapacitors with higher or lower rated voltages. Lower working voltages may be desirable in order to increase the supercapacitor expected lifetime.

Various technologies are available for making supercapacitors. They are usually fabricated using concentric winding of electrodes and separators into cylindrical or oval rolls. Said separators are usually preprared from polymeric sheets impregnated with an ion-conductive electrolyte. Each element is equipped with two opposedly oriented electrical leads for charging and discharging. The electrodes of each element can be identical so that said leads have no fixed polarity; interchangeable use of the leads as positive or negative pole is therefore allowable.

The term "supercapacitor" as used herein also includes so-called lithium-ion capacitors. These are hybrid capacitors in which the anode and cathode are different: the anode consists of a material (such as carbon) doped with lithium ions, while the cathode is usually activated carbon.

The system according to the invention also comprises a plurality of switches. A switch is generally used to form electronic paths required for configuration.

The energy storage system according to the present invention comprises several groups of capacitors, where most or all groups are equipped with a switching cell of two switches in a half-bridge configuration that allow inserting or excluding that group from the circuit. In this description, we shall refer to groups without the switching cell as "non-switched groups", and groups equipped with the half bridge switching cell as "switched groups". We shall refer to the top switch in the half-bridge as "top" or St, and to the bottom switch as "bottom" or Sb. When the top switch is on and the bottom switch is off, that switched group is ON and therefore its capacitors are inserted in series with the other groups. When the bottom switch is on and the top switch is off, that switched group is OFF and therefore its capacitors are excluded from the circuit. Each switched group may be switched ON or OFF independently of other groups. The groups can have equal or different numbers of capacitors in series, and equal or different values of capacitance. Groups can also consist in a single capacitor or more capacitors in series. Groups may also have capacitors in parallel.

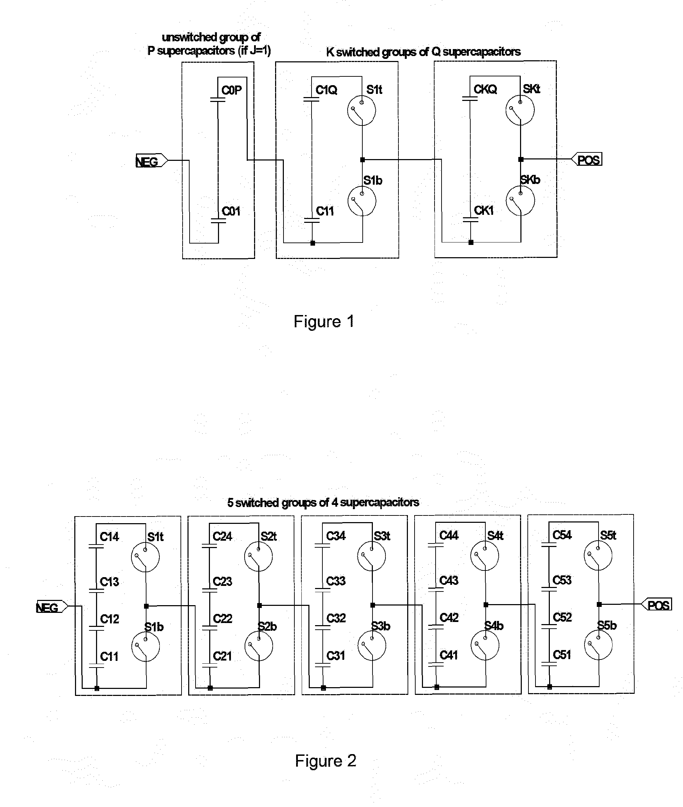

Figure 1 illustrates the generic case of the energy storage system according to the invention comprising J non-switched groups of P capacitors, where J can be 0 or 1, and K switched groups of Q capacitors in series, where K≥1. At any time, the number of switched groups that are switched ON will be referred to as i, where i<P. In a discharge sequence, the initial value of i will be referred to as N, where N<P.

For the sake of completeness and comparison, we include the notion of this generic case with J=1 and K=0, representing a conventional capacitor storage system without any switching cells.

Within a defined voltage range, a capacitor storage system without switching capability can only provide a small percentage of the energy stored within it.

A switched capacitor system with a defined switching strategy must provide as a minimum an improvement in the energy utilization efficiency over a defined limited range of output voltage.

Let the useful output voltage range be defined as *[Vmin, Vmax].* The energy stored in the fully charged capacitors is *Eₛₜ* = *0.5 C Vmax²,* but the available energy is *Eₐᵥ = 0.5 C (Vmax²* - *Vmin²).* Let *α* = *Vmin* / *Vmax* ; then available energy is *Eₐᵥ = (1* - *α²) Eₛₜ.* We can rewrite as *Eₐᵥ* = *ηᵤₜ Eₛₜ* where *ηᵤₜ* = *1* - *α²* = *1* - *(Vmin* / *Vmax)²* is the energy utilization efficiency.

Ideally, in order to use a reasonably high percentage of the available supercapacitor energy, one would design an electronic circuit powered by capacitors to operate over a range *α* = 0.5, thus reaching a respectable *ηᵤₜ* = 75 %. But, in practice most applications are designed for a much narrower voltage range, such as the voltage range of batteries.

For lithium battery cells, usable voltages range typically from 3.15 to 4.2V, thus *α* = 0.75. In this case supercapacitors would give a low energy utilization efficiency *ηᵤₜ* = 43.75 %, leaving over half the energy stored unused.

By applying a good switching strategy, one can maximize the available energy while respecting the limited output voltage range.

The switching strategy may also consider other factors, such as ensuring that all the capacitor groups have the same initial and final voltage.

In the case where J=0 (no non-switched groups) and K switched groups of Q capacitors in series, it is possible to achieve both the objectives described above. Initially, when all the supercapacitors are fully charged, in order to keep the output voltage less than *Vmax,* only N groups out of P are switched ON (i=N). In order to draw energy evenly from all capacitors, as more energy is drawn, the i capacitor groups are sequentially switched in a way that, by the end of the sequence, each group will have contributed an equal amount of energy. As energy is drawn and the voltages fall, one increments the number of active groups i to N+1 as soon as it possible to do so while keeping the output below *Vmax* (but above *Vmin*); if the number of switched ON groups i is less than P, again the i groups are sequentially switched in order to evenly spread the energy draw. This is repeated until the number of switched ON groups i reaches P (all groups are switched ON); at this point energy is drawn until *Vmin* is reached.

In a practical example, a device running on 10 lithium battery cells (36 V nominal) in series needs to be converted to capacitor energy packs. The electronics of the device are designed to accept a voltage between 42 V and 30 V. If this application had been implemented without the switching technique described here, using Sixteen capacitors, the output voltage when charged would reach 42 V (2.625 V per capacitor). When the 30 V cutoff voltage is reached (1.5 V per supercapacitor), only 49 % of the stored energy will have been delivered, which represents a very low energy utilization efficiency, i.e.: 51 % of the energy is left in the capacitors, unused.

For this same example one can increase the energy utilization efficiency dramatically, by using the configuration shown in figure 2, with J=0, K=5, Q=4, N=4. Initially i=4, i.e.: only 4 groups are switched ON (16 supercapacitors in series each at 2.625 V), to avoid exceeding the 42 V limit. In this initial phase, in order to draw energy evenly from all 5 groups, each one of the 5 groups takes its turn to rest, and the 4 active groups are regularly switched in the sequence:
ON-ON-ON-ON-off
ON-ON-ON-off-ON
ON-ON-off-ON-ON
ON-off-ON-ON-ON
off-ON-ON-ON-ON.

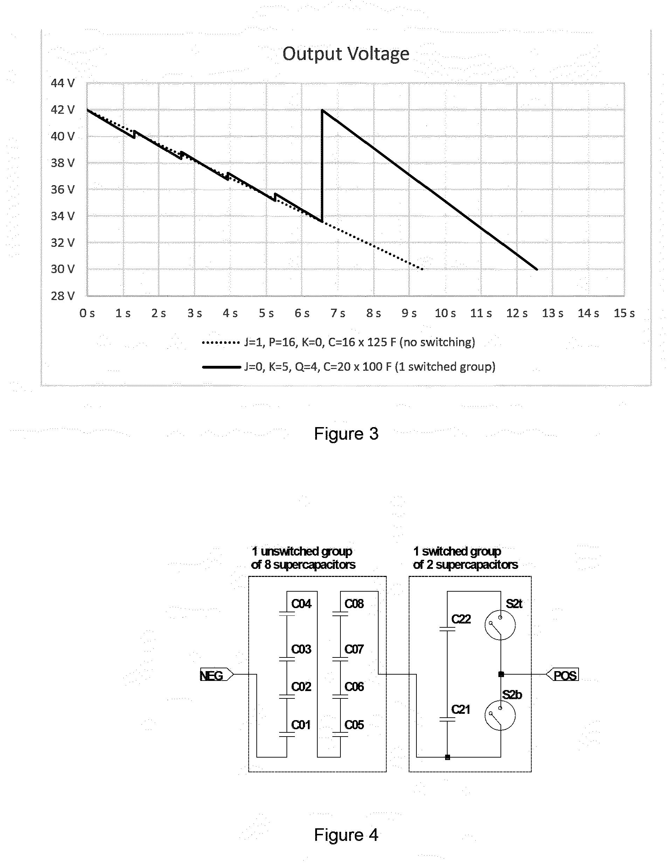

See the discharging pattern in figure 3. Once the voltage reaches 33.6 V (4/5 of 42 V), all capacitors are balanced at 2.1 V and i can be increased to 5, with all switched groups ON: ON-ON-ON-ON-ON. This bumps the output voltage back up to 42 V. Since all groups are now ON, discharge continues without switching, until the output is down to 30 V (1.5 V per supercapacitor). The energy utilization efficiency is now over 67 %. The capacitors began the sequence balanced, and they are balanced at the end.

Charging can follow the same pattern in reverse. In all cases, capacitors are balanced at the beginning and the end of the cycle, and at the transition from four to five groups.

In the previous example, all the capacitors start at the same voltage, and end at the same voltage. This can be desirable, but it has a cost in circuit complexity due to the high number of switches required. Solutions that are more economical are possible with different switching strategies and simpler circuits. Energy utilization can be improved significantly even in the most basic form of the proposed switched capacitor system.

Figure 4 illustrates an example of the energy storage system according to the invention in a simple form, with J=1 and K=1, comprising one non-switched group and one switched group of capacitors that is initially switched off. The number of capacitors P in the non-switched group is calculated in order that the group provides a voltage equal to or less than *Vmax* when fully charged. As energy is drawn and the voltages fall, the switched group of capacitors is switched ON as soon as it is possible to do so while keeping the output below *Vmax* (but above *Vmin*), in order to bring the voltage up to *Vmax* again. Thereafter energy is drawn from all the capacitors until *Vmin* is reached. Here there is no complex switching sequence: one begins with a reduced number of supercapacitors, and when possible, one switches the switched group ON to bump the output voltage back up to *Vmax.*

In a practical example of an application using this elementary switched capacitor system with only two switches, let us consider a cordless tool originally designed for five lithium battery cells (18 V nominal, 15 V minimum, 21 V maximum) that needs to be converted to capacitor power. If this application had been implemented without switching, using eight capacitors in series charged to 2.625 V, the energy utilization efficiency *ηᵤₜ* would have been only 49%, i.e.: 51% of the energy is left in the supercapacitors, unused.

By using the circuit shown in figure 4 with J=1, P=8, K=1, Q=2, N=0, that is to say, with only one switched group of two capacitors, the energy utilization efficiency *ηᵤₜ* will be improved to 66 %. When voltage falls from 21 V down to 15.75 V (which is still above the 15 V minimum) the switched group of two fully charged capacitors is switched ON, causing the voltage seen by the tool to jump from 15.75 V to 21 V (i.e.: 15.75 V + 2 x 2.625 V), which is within the maximum allowed. The capacitors can then continue to discharge until the minimum of 15 V is reached (8 x 1.37 + 2 x 2.02).

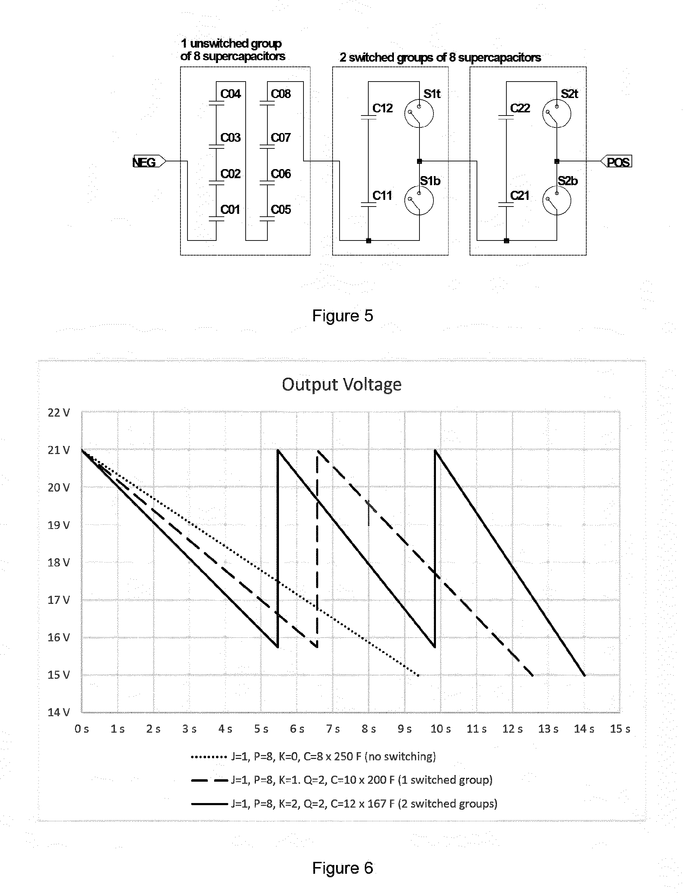

Improving further on this example, by adding a second switched group as shown in figure 5 with J=1, P=8, K=2, Q=2, N=0 one can increase the energy utilization efficiency to over 74 %. After following same sequence as for figure 4, down to 15.75V, the new group of two capacitors is switched on and the capacitors are allowed to continue to discharge until the minimum voltage of 15 V is reached.

Summarizing, for the example application given, whereby a simple capacitor storage system would have an energy utilization efficiency *ηᵤₜ* = 49 %, one can increase *ηᵤₜ* to over 67 % with only two switches, and increase *ηᵤₜ* to over 74 % with only 4 switches. See the discharging pattern in figure 3 to observe the behavior of the three cases (with 0, 1 and 2 switched groups), knowing that all three have identical conditions of discharge current and stored energy, but vastly different amounts of available energy.

Note that in this application, even though the smaller groups of 2 supercapacitors do not reach the same depth of discharge as the large group of 8, by doing the same switching procedure in reverse during charging, all capacitors will end up charged and balanced to the same desired voltage level of 2.625 V.

The examples above are for illustrative purposes and do not exclude other configurations.

The examples above assume that all supercapacitors in a storage system have the same capacitance. However, it is also possible to have groups of capacitors with different values of capacitance. In situations like in figure 4 and figure 5, by reducing the capacitance value of the capacitors in the switched groups, one can achieve a system where all capacitors are at the same voltage both at the beginning and at the end of the discharge curve.

The person skilled in the field of power electronics design can come up with the right combination of parameters, depending on *Vmin, Vmax,* the net energy required, and the maximum voltage of the supercapacitors, which depends on the component rating and lifetime expected at the operating voltages and temperatures.

In general, design choices are dictated by the tradeoff between economical switched capacitor circuits with fewer switches with lower energy utilization efficiency, and more complex and costly systems with higher energy utilization efficiency.

Switches S can be of the MOSFET type, or any other type known to a person skilled in the art.

The system according to the invention can be manufactured with various output voltages and capacities, as required by the electric device which it is intended to power. In particular, the system can be manufactured as a plug-in pack capable to directly replace a battery pack in a battery-powered device. Such devices can be electric, cordless tools which require the supply of a rather high electrical power over a rather short period of time, such as screwdrivers, drills, circular saws, jigsaws, reciprocating saws, mitre saws, grinders, impact drivers, impact wrenches, nailers, staplers, planers, sanders, or hammers.

## Claims

1. System for storing electrical energy using groups of capacitors (C) being connected to each other,
said system comprising J non-switched groups of P capacitors (C) in series,
where J=0 or J=1, and if J=1 then P≥1, and P is an integer,
where said J non-switched group, if present, comprise only P capacitors and no switches, said system also comprising K switched groups of Q capacitors (C) in series,
where K≥1 and Q≥1, and K and Q are integers,
where said K switched groups are equipped with a pair of switches, namely top switches (St) and bottom switches (Sb), in a half-bridge configuration,
said half-bridges being configured to either exclude or insert the associated group of capacitors from said system,
said system having all groups connected in series.

2. System according to claim 1, **characterized in that** said K switched groups of capacitors (C) comprise an equal number Q of capacitors (C).

3. System according to claim 1, **characterized in that** said K switched groups of capacitors (C) comprise different numbers Q₁,Q₂,...Q_{K} of capacitors (C).

4. System according to any of claims 1 to 3, **characterized in that** the capacitors (C) in the K switched groups have a different value of capacitance than the P capacitors (C) in the non-switched group.

5. System according to any of claims 1 to 3, **characterized in that** at least one of the K switched groups of capacitors (C) has the same value of capacitance as the P capacitors (C) in the non-switched group.

6. System according to any of claims 1 to 5, **characterized in that** said groups of capacitors (C) comprise only capacitors (C) connected in series.

7. System according to any of claims 1 to 5, **characterized in that** said groups of capacitors (C) comprise only capacitors (C) connected in parallel.

8. System according to any of claims 1 to 5, **characterized in that** the non-switched group of capacitors (C) comprises capacitors (C) connected in series and the K switched groups of capacitors (C) comprise capacitors (C) connected in parallel, or vice versa.

9. System according to any of claims 1 to 8, **characterized in that** there is a non-switched group of capacitors (C) that comprises P capacitors, and there are K switched groups of capacitors (C) that comprise Q capacitors, P, K and Q being integers greater than or equal to one.

10. System according to any of claims 1 to 9, **characterized in that** said pairs of switches (Spa, Spb) are of the MOSFET, IGBT or relay type.

11. System according to any of claims 1 to 10, **characterized in that** said pair of switches (St, Sb) in a half-bridge configuration comprises one switch (St) to include capacitors (C) in said system and one switch (Sb) to exclude capacitors from said system.

12. System according to any of claims 1 to 11, **characterized in that** said system is configured to deliver a voltage *Vmax* for said groups of capacitors (C) fully charged and a voltage *Vmin* for said groups of capacitors (C) discharged, said system comprising a control means for monitoring voltage in said groups of capacitors (C) and controlling said pairs of switches (Spa, Spb) to avoid reaching a voltage above Vmax or below *Vmin.*

13. System according to any of claims 1 to 12, wherein at least part, and preferably all of said capacitors are supercapacitors or hybrid capacitors or lithium capacitors.

14. System according to any of claims 1 to 13, wherein at least some of said capacitors are replaced by batteries, such as lithium batteries.

15. Use of a system according to any of claims 1 to 14 to replace a battery pack in a battery-powered electric device.
